# EUROPEAN PATENT SPECIFICATION

(11) **EP 2 729 283 B1**
(45) Date of publication and mention of the grant of the patent: **10.10.2018**
(21) Application number: 11870189.5
(22) Date of filing: 08.07.2011
(51) Int. Cl.: B27B 13/10, B27B 13/08, B23D 55/08, B23D 55/10, B26D 7/26

(54) **A GLIDING PART FASTENED TO A SAWING DEVICE**
GLEITELEMENT BEFESTIGT AN EINER SÄGEVORRICHTUNG
PIÈCE COULISSANTE FIXÉE À UN DISPOSITIF DE SCIAGE

(43) Date of publication of application: 14.05.2014
(73) Proprietor: Viljanen, Reijo, 33101 Tampere (FI)
(72) Inventor: Viljanen, Reijo, 33101 Tampere (FI)
(74) Representative: Koivisto, Harri Kristian
(86) International application number: PCT/FI2011/000035
(87) International publication number: WO 2013/017728

(56) References cited:
- WO-A1-00/47378
- WO-A1-00/47378
- CA-A1- 2 745 563
- US-A- 4 336 731
- US-A- 4 336 731
- US-A1- 2009 126 549
- US-A1- 2009 126 549

## Description

The invention relates to an arrangement according to the preamble of claim 1. Such an arrangement is known from US20090126549A1.

Previously a method is known from the Finnish published application FI-20050790 in order to tension the blade of a sawing device and in order to direct it to make it stay at the intended sawing line in which case in the method the blade needs to be made of magnetizable material. In the method a sawing tightening is tensioned to the blade with the help of elements creating magnetic force by moving the mentioned blade in a sideways direction to the intended sawing line, the mentioned sawing line is formed at the part to be sawed which is between the mentioned elements and with the help of the mentioned elements the blade is being controlled all the time during the sawing with the intention that the part meant to be at the sawing line of the blade can be adjusted with no contact to stay at the mentioned sawing line. In the solution the blade is either pulled or pushed with the magnets and no mechanical contact between the blade and the magnet is wanted.

When in this kind of solution the saw becomes burdened and the burdens vary, the band knife immediately tightens and analogously comes loose and the magnets must be able to immediately increase or reduce the pulling/pushing force. The control system must be fast and accurate and it is difficult to keep the band knife exactly at the intended sawing line because the variations in tightness of the band knife aim at moving the band knife in a sideways direction.

Patent application US 200090126549A1 discloses a band saw assembly and method of positioning a band saw blade during sawing. The method comprises a system to steer the band saw blade by turning its direction by magnetic force if the direction must be adjusted or kept unchanged.

Publication WO 00/47378 disclosed a sawing method which is arranged to steer the blade back to the aimed sawing line by means of the magnetic force if said blade is deviating from the aimed line during sawing.

The solutions above do not comprise a function of the magnetic force to keep the band saw blade in contact with the counter element.

With the counter element with which the blade of the sawing device, such as the blade of the band sawing machine is being tensioned and is being directed to stay at the chosen sawing line and which counter element can be attached to the body of the sawing device according to the invention the abovementioned problem is solved and unexpected advantages can be achieved regarding the functioning of the blade when the burdens of the blade and the states of tightness vary. It is characteristic of the arrangement according to the invention that the arrangement comprises a magnetic device in order to improve the function belonging to the counter element and in order to improve the sawing result with the help of which magnetic force created by the magnetic device the blade is being controlled with the force having the same direction which force pushes the blade against the counter element.

The advantage of the invention is the fact that the blade can be made to stay more surely at the intended sawing line and in the sawing direction when the blade has a continuous contact with the controlling counter element, such as a slipper pad or a roll with the help of a pressing occurring with a magnet. The sawing can also be directed by turning the blade at different direction angles which turning can be performed by turning the counter element. The contact of the blade with the counter element remains also in this situation. The turning of the blade away from the sawing line which is caused by for example the non-homogeneity of the item to be sawed can be fixed when the position of the blade next to the item to be sawed is explored with the help of sensors and the situation is improved immediately by increasing magnetic force. The control system required for the performing of the improvement is easy to realize.

In the following the invention is described in more details by referring to the accompanying drawings in which
Figure 1 shows a band sawing machine seen as a side view which band sawing machine has counter elements and magnets according to the invention at the both sides of the sawing point.
Figure 2 shows the blade of the band sawing machine at the location at which the counter element and other components are located.
Figure 3 shows a slipper pad as a partial section view.

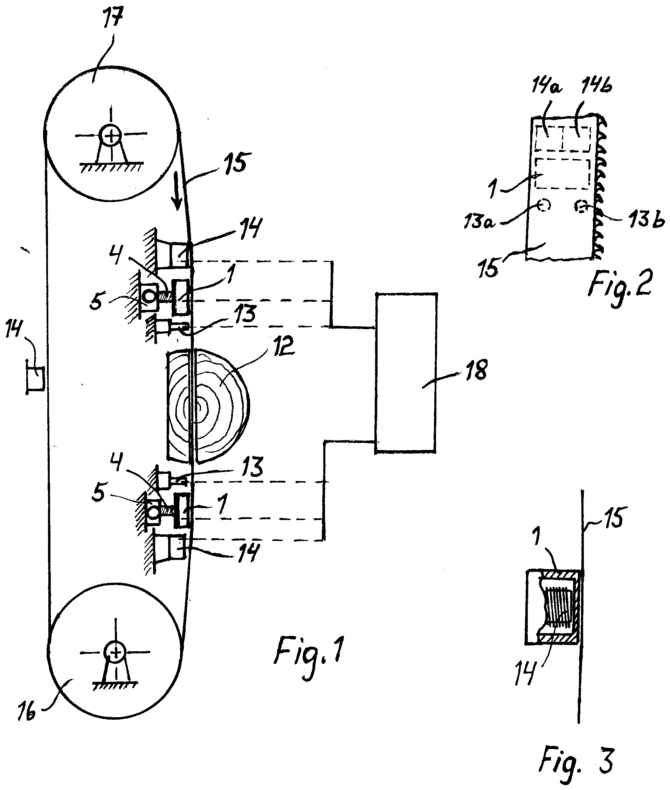

In the figure 1 a sawing situation is shown in which the wood 12 is being sawed with the help of a band sawing machine. The band knife 15 moves through the sheaves 16, 17 and the wood 12 is being fed to move towards the blade. The slipper pads are located at the both sides of the sawing point as counter elements 1 the installation of which slipper pads for the sawing process is made in such a way that they push the band knife 15 slightly outwards (to the right) and tension and tighten the blade 15 at the same time and give a sawing direction for the blade. Between the slipper pads and the item 12 to be sawed there are sensors 13 which explore the position of the band knife 15. In addition to that the sawing device comprises a control center 18 which controls the magnetic force of the magnetic devices 14 on the grounds of the signals sent by the sensors 13, if needed, if the blade aims to come loose from the slipper pad. The slipper pads can be moved in a sideways direction for example by screwing the conveyor screw 4 and thus one can achieve a desired tightening and a desired sawing direction for the blade.

The band knife 15 is pulled or pushed close to the slipper pads with the help of magnets 1 if the blade for some reason aims to move outwards for example due to a tightening which is too insignificant. The sensors 13 indicate this loosening and the traction power of the magnets 14 is then increased regulated by the control center 18. The magnets have most advantageously a pre-adjusted basic pulling or pushing force and it is increased, if needed. The usage of magnets requires that the blade 15 is made of magnetizable material. The magnets can also be permanent magnets. The magnet 14 can be located also at the back of the blade 15 behind the sawing device, such as in the figure 1. When the blade 15 is being pulled or pushed with this magnet 14, then also the blade 15 is being tightened and is being pushed at the same time against the counter elements 1.

The body of the sawing device which comprises the slipper pads 1, sensors 13 and magnets 14, is formed to be moveable in relation to the actual body of the sawing device in which case by moving this body part the moving of the band knife 15 is performed outwards into a tensioned state.

With the help of the control center 18 both slipper pads are adjusted simultaneously. If the sensors 13 indicate that the blade 15 is about to come loose either at its front or rear edge regarding one or the other slipper pad, the parallel magnets 14a, 14b can for example be controlled separately and forces of different strengths can be gained at the front and rear edge of the blade which forces push against the slipper pad.

In the figure 2 the slipper pad is shown in relation to the band knife 15. There are two sensors 13, 13a and 13b in which case the loosening of the blade 15 from the slipper pad or the direction at the location of the sensors is recognized with the help of these sensors. With the help of the control center 18 a stronger force can be adjusted to the other magnet and the blade 15 can be pulled or pushed against the slipper pads in such a way that the direction of the blade becomes fixed.

In the figure 3 a slipper pad is shown inside which a magnetic device 14 is adjusted. The magnet 14 is covered by the slipper pad 1 and does not collect very easily metallic dust to itself.

## Claims

1. Arrangement comprising a counter element (1), such as a roll or a slide block, said counter element (1) being fastened to a body of a sawing device for tensioning a blade (15) of a band sawing machine by means of said counter element (1) to a chosen sawing line and for steering said blade to stay at the mentioned sawing line, said arrangement comprising a sensor (13) for sensing the position of the saw blade (15), and a control center (18) for controlling the position of the saw blade (15) based on the information provided by the sensor (13), the arrangement further comprising a magnetic device (14) which produces a magnetic force, **characterized in that** said magnetic force is directed to push or pull the blade (15) so that the magnetic force pushes or pulls the blade (15) against the counter element (1) based on the signals sent by the sensor (13), if the blade (15) aims to come loose from the counter element (1).

2. Arrangement according to the claim 1, **characterized in that** the counter element (1) can be moved into various positions which tension the blade (15) and its direction can be adjusted into various directions which direct the blade (15).

3. Arrangement according to the claim 1, **characterized in that** the magnetic device (14) is divided into two or more parallel sections (14a), (14b).

4. Arrangement according to the claim 1, **characterized in that** the magnetic device (14) is a permanent magnet or an electric magnet.

5. Arrangement according to the claim 1, **characterized in that** the arrangement comprises one or more sensors (13) recognizing the position of the blade (15).

6. Arrangement according to the claim 1, **characterized in that** counter elements (1) and magnetic devices (14) are provided at both sides of a billet (12) to be sawed.

7. Arrangement according to the claim 6, **characterized in that** the magnetic devices (14) are located further from the wood (12) to be sawed than the counter elements (1).

8. Arrangement according to the claim 6, **characterized in that** the magnetic devices (14) are located closer to the wood (12) to be sawed than the counter elements (1).

9. Arrangement according to the claim 1, **characterized in that** the magnetic devices (14) are located at the counter element (1) in order to control the blade (15) through the counter element (1).

10. Arrangement according to the claim 1, **characterized in that** the magnetic devices (14) are located at the return side of the blade (15) at the back of the saw.

## Patentansprüche

1. Anordnung, die ein Gegenelement (1) wie eine Rolle oder einen Gleitblock umfasst, wobei das Gegenelement (1) an einem Körper einer Sägevorrichtung befestigt ist, um ein Sägeband (15) einer Bandsägemaschine anhand des Gegenelements (1) auf eine gewählte Sägelinie zu spannen und das Sägeband zu führen, damit es auf der erwähnten Sägelinie bleibt, wobei die Anordnung einen Sensor (13) zum Feststellen der Position des Sägebands (15) und ein Steuerzentrum (18) zum Steuern der Position des Sägebands (15) aufgrund der vom Sensor (13) bereitgestellten Informationen umfasst, wobei die Anordnung ferner eine magnetische Vorrichtung (14) umfasst, die eine Magnetkraft erzeugt, **dadurch gekennzeichnet, dass** die Magnetkraft so gerichtet ist, dass sie das Sägeband (15) drückt oder zieht, sodass die Magnetkraft das Sägeband (15) aufgrund der Signale, die vom Sensor (13) gesendet werden, gegen das Gegenelement (1) drückt oder zieht, wenn das Sägeband (15) Anstalten macht, sich vom Gegenelement (1) zu lösen.

2. Anordnung nach Anspruch 1, **dadurch gekennzeichnet, dass** das Gegenelement (1) in verschiedene Positionen bewegt werden kann, die das Sägeband (15) spannen, und dessen Richtung in verschiedene Richtungen eingestellt werden kann, die das Sägeband (15) führen.

3. Anordnung nach Anspruch 1, **dadurch gekennzeichnet, dass** die magnetische Vorrichtung (14) in zwei oder mehr parallele Abschnitte (14a), (14b) geteilt ist.

4. Anordnung nach Anspruch 1, **dadurch gekennzeichnet, dass** die magnetische Vorrichtung (14) ein permanenter Magnet oder ein Elektromagnet ist.

5. Anordnung nach Anspruch 1, **dadurch gekennzeichnet, dass** die Anordnung einen oder mehrere Sensoren (13) umfasst, die die Position des Sägebands (15) erkennen.

6. Anordnung gemäß Anspruch 1, **dadurch gekennzeichnet, dass** Gegenelemente (1) und magnetische Vorrichtungen (14) auf beiden Seiten eines zu sägenden Holzbocks (12) vorgesehen sind.

7. Anordnung gemäß Anspruch 6, **dadurch gekennzeichnet, dass** die magnetischen Vorrichtungen (14) weiter von dem zu sägenden Holz (12) angeordnet sind als die Gegenelemente (1).

8. Anordnung gemäß Anspruch 6, **dadurch gekennzeichnet, dass** die magnetischen Vorrichtungen (14) näher am zu sägenden Holz (12) angeordnet sind als die Gegenelemente (1).

9. Anordnung gemäß Anspruch 1, **dadurch gekennzeichnet, dass** die magnetischen Vorrichtungen (14) am Gegenelement (1) angeordnet sind, um das Sägeband (15) durch das Gegenelement (1) zu steuern.

10. Anordnung gemäß Anspruch 1, **dadurch gekennzeichnet, dass** die magnetischen Vorrichtungen (14) auf der Rücklaufseite des Sägebands (15) auf der Rückseite der Säge angeordnet sind.

## Revendications

1. Agencement comprenant un contre-élément (1), tel qu'un rouleau ou un bloc coulissant, ledit contre-élément (1) étant fixé à un corps d'un dispositif de sciage pour mettre en tension une lame (15) d'une machine de sciage à ruban, au moyen dudit contre-élément (1), sur une ligne de sciage choisie et pour diriger ladite lame pour qu'elle reste sur ladite ligne de sciage, ledit agencement comprenant un capteur (13) pour détecter la position de la lame de scie (15), et un centre de commande (18) pour commander la position de la lame de scie (15) sur la base des informations fournies par le capteur (13), l'agencement comprenant en outre un dispositif magnétique (14) qui produit une force magnétique, **caractérisé par le fait que** ladite force magnétique est dirigée pour pousser ou tirer la lame (15) de telle sorte que la force magnétique pousse ou tire la lame (15) contre le contre-élément (1) sur la base des signaux envoyés par le capteur (13), si la lame (15) vise à se détacher du contre-élément (1).

2. Agencement selon la revendication 1, **caractérisé par le fait que** le contre-élément (1) peut être déplacé dans diverses positions qui mettent en tension la lame (15) et sa direction peut être ajustée dans diverses directions qui dirigent la lame (15).

3. Agencement selon la revendication 1, **caractérisé par le fait que** le dispositif magnétique (14) est divisé en au moins deux sections parallèles (14a), (14b) .

4. Agencement selon la revendication 1, **caractérisé par le fait que** le dispositif magnétique (14) est un aimant permanent ou un électroaimant.

5. Agencement selon la revendication 1, **caractérisé par le fait que** l'agencement comprend un ou plusieurs capteurs (13) reconnaissant la position de la lame (15).

6. Agencement selon la revendication 1, **caractérisé par le fait que** des contre-éléments (1) et des dispositifs magnétiques (14) sont prévus sur les deux côtés d'une billette (12) à scier.

7. Agencement selon la revendication 6, **caractérisé par le fait que** les dispositifs magnétiques (14) sont plus éloignés du bois (12) à scier que les contre-éléments (1).

8. Agencement selon la revendication 6, **caractérisé par le fait que** les dispositifs magnétiques (14) sont plus proches du bois (12) à scier que les contre-éléments (1).

9. Agencement selon la revendication 1, **caractérisé par le fait que** les dispositifs magnétiques (14) sont situés au niveau du contre-élément (1) afin de commander la lame (15) par l'intermédiaire du contre-élément (1).

10. Agencement selon la revendication 1, **caractérisé par le fait que** les dispositifs magnétiques (14) sont situés sur le côté de retour de la lame (15) à l'arrière de la scie.
